# EUROPÄISCHE PATENTSCHRIFT

(11) **EP 3 643 872 B1**
(45) Veröffentlichungstag und Bekanntmachung des Hinweises auf die Patenterteilung: **04.05.2022**
(21) Anmeldenummer: 18201681.6
(22) Anmeldetag: 22.10.2018
(51) Int. Cl.: E21B 7/04, E02D 19/08, B09C 1/00, B09C 1/10

(54) **VERFAHREN ZUR REDUZIERUNG EINER HYDRAULISCH WIRKSAMEN POROSITÄT EINER PORÖSEN FESTSTOFFMATRIX**
METHOD FOR REDUCING A HYDRAULICALLY EFFECTIVE POROSITY OF A POROUS SOLID MATRIX
PROCÉDÉ DE RÉDUCTION DE LA POROSITÉ HYDRAULIQUEMENT ACTIVE D'UNE MATRICE SOLIDE POREUSE

(43) Veröffentlichungstag der Anmeldung: 29.04.2020
(73) Patentinhaber: Technische Universität Dresden, 01067 Dresden (DE); Sensatec GmbH, 24159 Kiel (DE); Beermann Bohrtechnik GmbH, 48477 Hörstel-Riesenbeck (DE)
(72) Erfinder: Engelmann, Frank, 16833 Fehrbellin (DE); Mücke, Timo, 48477 Hörstel (DE); Burghardt, Diana, Dr., 01187 Dresden (DE); Krause, Thomas, 01159 Dresden (DE)
(74) Vertreter: Gottfried, Hans-Peter

(56) Entgegenhaltungen:
- WO-A1-2009/007760
- US-A- 4 832 122
- US-A- 5 345 034
- US-A- 5 480 549
- US-A1- 2005 276 662
- US-B2- 7 320 365

## Beschreibung

Die Erfindung betrifft ein Verfahren zur Herstellung einer Vorrichtung zur Durchführung eines Verfahrens zur Reduzierung einer hydraulisch wirksamen Porosität einer porösen Feststoffmatrix.

Die Reduzierung der hydraulisch wirksamen Porosität einer porösen Feststoffmatrix bewirkt beispielsweise eine Verminderung des Durchflusses eines in der porösen Feststoffmatrix vorliegenden Fluids, beispielsweise Grundwasser im Sedimentgefüge des Untergrunds. Darüber hinaus kann der Gasspeicher in Abhängigkeit von dem eingebrachten Gas oder Gasgemisch weitere Effekte hervorrufen, insbesondere durch eine chemische Reaktion mit dem Fluid, beispielsweise kontaminiertem Grundwasser, oder der porösen Feststoffmatrix, beispielsweise dem Sedimentgefüge. Verschiedene Verfahren, die derartige Ziele verfolgen, sind aus dem Stand der Technik bekannt.

Aus den Druckschriften EP 0 780 166 A1, WO 00/63127 A1, WO 00/45970 A1, US 6,210,073 B1, US 5,133,625 A, US 4,442,895 A, US 5,032,042 A und EP 1 550 519 A1 sind Verfahren und Vorrichtungen zur Stimulation des Abbaus grundwasserfremder Stoffe in Lockergesteinsgrundwasserleitern durch Direktgasinjektionen ins Grundwasser bekannt. Durch Gaseintrag über vertikale Gaslanzen werden im Untergrund Gaswände geschaffen und somit möglichst gut durchströmbare in-situ Festbettdurchflussreaktoren formiert.

Alle vorgenannten Verfahren sind dadurch gekennzeichnet, dass sie auf vertikalen Injektionsvorrichtungen mit einem erheblichen konstruktiven und überwachungstechnischen Aufwand basieren. Zudem werden durch die annähernd paraboloidförmige Ausbreitung der Gase ausgehend vom Injektionspunkt in den Grundwassersystemen kegelförmige Bereiche in den Gaswänden nicht gleichmäßig und ausreichend mit Gas versorgt.

Die Druckschriften EP 0 625 126 B1 und US 4,832,122 A beschreiben Verfahren und Vorrichtungen, bei denen ein Gaseintrag in ein Sedimentgefüge mit Hilfe horizontaler Gaslanzen erfolgt. Dieses System weist zwei Arten bzw. Sätze von Brunnen auf, einen Eingabe- bzw. Injektionsbrunnen zum Eingeben bzw. Injizieren eines Fluids in eine gesättigte Zone auf einer Seite der Schadstoffe oder in den Schadstoffbereich hinein und einen Abzugs- bzw. Extraktionsbrunnen zum Sammeln des Fluids zusammen mit den gelösten bzw. flüchtig gemachten Schadstoffen aus dem Bereich, und zwar entweder auf der anderen Seite des Bereichs oder oberhalb davon oder innerhalb dieses Bereichs. Ein erhöhter installationstechnischer Aufwand ist somit durch den Bedarf der voneinander getrennten Applikations- und Extraktionssysteme gegeben. Vor allem aber ist eine Reduzierung der hydraulisch wirksamen Porosität der porösen Feststoffmatrix, in die das System eingebaut ist, durch die Injektion von Gas nicht vorgesehen. Im Gegenteil, zum Sammeln des Fluids zusammen mit den gelösten bzw. flüchtig gemachten Schadstoffen ist eine ausreichende Durchströmung zwingend erforderlich sowie ein hoher Energie- und Materialaufwand zu leisten, um den angestrebten Effekt zu erzielen.

Nach DE 101 53 061 A1 ist ein Verfahren und eine Vorrichtung für die Erstellung eines Horizontalfilterbrunnens zur Entnahme von Flüssigkeiten bekannt. Die Vorrichtung wird durch einen Filterstrang für unterirdische Sammelleitungen für Flüssigkeiten gebildet, insbesondere für Horizontalfilterbrunnen und Drainageleitungen aus einem standfesten, zum Einziehen in eine Bohrung im Untergrund ausreichende mechanische Festigkeit aufweisenden, groblöchrigen Loch- oder Gitterrohr und darin angeordnetem Filtermaterial. Die Verfahren zum Einbringen des Filterstrangs in vorbestimmte Schichten sind dadurch gekennzeichnet, dass zunächst ein stabiles und standfestes Bohrloch erzeugt wird, welches einen auf den Filterstrang abgestimmten Durchmesser aufweist. Das Bohrloch bzw. die Bohrlochwand wird beim bzw. nach dem Einbau des Filterstranges mechanisch nicht weiter bearbeitet. Eine gezielte Bohrkanalformierung ist nur indirekt über das bereits eingezogene Filterrohr vorgesehen. Damit sind die Eigenschaften hinsichtlich der hydraulischen Leitfähigkeit der Bohrlochwand nicht gezielt beeinflussbar.

Aus der Druckschrift DE 10 2004 020 888 A1 ist ein Verfahren bekannt, bei dem mittels grabenloser Technik ein permeables Rohrsystem verlegt wird. Die Erfindung wird insbesondere für Entwässerungs- oder Drainagezwecke im Erdreich genutzt. Hierzu wird zunächst ein Stützrohr des mindestens zweiteiligen Rohrsystems mittels grabenloser Verlegetechnik in das Erdreich eingebracht und anschließend mindestens ein Filterkörper in das Stützrohr eingezogen.

Sowohl der Einsatz vertikaler als auch horizontaler Gaslanzen ist bei allen aus dem Stand der Technik bekannten Verfahren auf eine Reinigung des Untergrundes durch eine Reduzierung der Schadstoffkonzentrationen, insbesondere infolge der Stimulation mikrobieller Abbauprozesse, ausgerichtet. Eine signifikante, gezielte Reduzierung der hydraulisch wirksamen Porosität des Untergrundes ist nicht vorgesehen. Abbauprozesse, die viel Zeit benötigen, bringen nur unzureichende Resultate, da die aktiven Abbauprozesse durch ein Abdriften von Grundwasser, Mikroorganismen und Fracht gestört werden. Zudem entsteht durch den Einbau vertikaler Gaslanzen ein erheblicher Aufwand, da diese relativ dicht nebeneinander eingebracht werden müssen, um einen geschlossenen Bereich mit herabgesetzter hydraulisch wirksamer Porosität zu erreichen - ohne dass jedoch eine lückenlose Gasverteilung erreicht werden kann.

Bei der Lösung, die aus der Druckschrift DD 203 349 A1 bekannt ist, ist eine Injektion von Gas in ein Sedimentgefüge vorgesehen und es wird das Ziel verfolgt, eine Barriere zur Vermeidung eines Grundwasserabflusses zu erzeugen. Hierzu werden vertikale Brunnen in den Untergrund eingebracht. Diese müssen jedoch verhältnismäßig eng beieinander und auch tief eingebracht werden, um die Barriere ausreichend dicht herzustellen. Dies ist mit einem erheblichen Aufwand verbunden. Für den Eintrag reaktiver Gase ist das Verfahren ungeeignet, da zwischen den vertikalen Brunnen stets Bereiche entstehen werden, die nicht vom reaktiven Gas erreicht werden und somit auch keine Abbauprozesse über das gesamte zu behandelnde Volumen initiiert werden können.

Die Druckschrift US 2005/0276662 A1 beschreibt ein System und ein Verfahren zur beschleunigten Dekontamination von kontaminiertem Boden, der ungesättigten Zone und/oder dem Grundwasser. Schadstoffe werden aus dem Boden und aus dem Grundwasser mittels Wärmeinjektion durch Gräben oder gerichtet gebohrte oder horizontal gebohrte und installierte Versorgungsleitungen, mittels Reinsauerstoffinjektion durch separate Leitungen, die auf die gleiche Weise wie die Leitungen für die Wärmeversorgung installiert werden, sowie mittels Bioventing, Begasung und Bioremediation, zugeführt die Sauerstoffversorgungsleitungen, und mittels Bodendampfabsaugung durch vertikale Brunnen eliminiert. Die Bohrungen können auch geneigt ausgeführt sein. Die Schadstoffe werden durch Filtration oder Oxidation aus dem Bodengas abgetrennt. Verbleibende Schadstoffe in der ungesättigten Zone und/oder im Grundwasser werden durch Temperaturerhöhung mittels Wärmeinjektion und/oder Oxidation mittels Schadstoff abbauender Mikroorganismen entfernt.

Aufgabe der Erfindung ist es, ein verbessertes Verfahren für die Herstellung einer Vorrichtung anzubieten, mit der ein Verfahren zur Reduzierung einer hydraulisch wirksamen Porosität einer porösen Feststoffmatrix vorbereitet und durchgeführt wird.

Die Aufgabe der vorliegenden Erfindung wird gelöst durch ein Verfahren zur Herstellung einer Vorrichtung zur Durchführung eines Verfahrens zur Reduzierung einer hydraulisch wirksamen Porosität einer porösen Feststoffmatrix durch Injektion wenigstens eines Gases in die poröse Feststoffmatrix, umfassend die nachfolgend beschriebenen Schritte.

Zunächst wird eine Horizontalbohrung als Pilotbohrung unter Verwendung einer Bohrspülung eingebracht und bevorzugt gleichzeitig erfolgt ein Eintrag von Material, beispielsweise Mikrodolomit. Ein weiterer Eintrag von Material wird erreicht durch Anfahren ausgewählter Sandschichten oder durch Einsatz einer Materialeinspülkammer. Diese ist beispielsweise mit Material der Körnungen Feinsand bis Mittelkies (darunter Feinkies) oder ähnlichen Materialien befüllt. Das Material dient zur Ausbildung einer Filterzone, dem späteren homogenisierten Bereich, und der Beeinflussung einer Gaswegsamkeit über die Filterzone in die sich anschließende Feststoffmatrix.

Der Bohrkanal zeichnet sich dadurch aus, dass er im Gegensatz zur umliegenden Feststoffmatrix, z. B. dem Gebirge, das aus der porösen Feststoffmatrix gebildet wird, eine geringere Lagerungsdichte mit einem erhöhten Anteil feinerer Kornfraktionen und größerer Ungleichförmigkeit enthält. Hierdurch wird die zunächst angestrebte bevorzugte laterale Gasverteilung im Bohrkanal und der sich dann anschließende, kohärente und inkohärente, vertikale Gasaufstieg in die Feststoffmatrix bzw. in das darüber liegende Gebirge, notwendig zur Formierung des Gasspeichers, ermöglicht.

Der Bohrkanal wird gemäß einer Ausführungsform zum praktischen Einsatz nach einer durch den Gaseintrag induzierten hydrogeologischen Erkundung der Bohrtrasse mit dem HDD-Bohrverfahren (Horizontalspülbohrverfahren) bereits im Arbeitsprozess der Pilotbohrung vorgeprägt, d. h. Sediment zur Erzeugung einer Auflockerungszone ausgebohrt.

Das Auffahren der Pilotbohrung, die vorteilhafterweise einen sehr kleinen Durchmesser aufweisen kann (ab 60 mm Durchmesser), erfolgt vorzugsweise unter Manipulation der Kornzusammensetzung der Filterzone durch ein Einspülen von Material in den mit Bohrsuspension gefüllten Bohrkanal, wie zuvor beschrieben. Bevorzugt ist der Einsatz einer Tonspülung mit Polymerzugabe zur Stabilisierung der Bohrlochwand. Der Tonspülung wird zusätzlich Mikrodolomit beigefügt, welches über den Bohrkopf beim Freischnitt in die engere Umgebung außerhalb des Pilotbohrkanals eintritt und hier zu einer Verringerung der hydraulisch wirksamen Porosität der bohrlochnahen Sedimente führt. Die Tonspülung kolmatiert im Bereich der Bohrlochwand und bildet hier eine dünne Schicht mit sehr geringer hydraulischer Leitfähigkeit aus. Dieser aus dem Brunnenbau bekannte "Skin-Effekt" würde ohne einen weiteren technologischen Eingriff zu einer signifikanten Behinderung des vorgesehenen Gasaufstiegs führen und insbesondere keinen kohärenten Gasdurchtritt ermöglichen. Deshalb erfolgt die unten beschriebene Homogenisierung des Bohrkanals, in deren Ergebnis der homogenisierte Bereich gebildet wird.

Zur Erhöhung des Feinkornanteils in der Bohrspülung gegenüber dem umliegenden Gebirge wird die Pilotbohrung am Ende in eine natürliche Feinsandlage oder eine erstellte Grube mit Feinsand geführt und der Spülungsrückfluss auf seinen Feinsandanteil geprüft.

Eine zusätzliche Möglichkeit, ggf. auch zur abschnittsweisen Veränderung der Zusammensetzung der Bohrspülung der Pilotbohrung erfolgt durch den Einsatz einer Materialeinspülkammer. Sie kommt am Ausgang der Pilotbohrung zum Einsatz und besteht aus einem einseitig verschließbaren Rohr. Dieses wird im geöffneten Zustand über einen Zuganker mit Hilfe des Bohrgestänges in den Untergrund gezogen, nachdem die Pilotbohrung hergestellt wurde und das Bohrgestänge zurückgezogen wird.

Nach Befüllung der Materialeinspülkammer mit Material der Körnungen Feinsand bis Mittelkies oder anderen Materialien zur Anpassung der Bohrlochgaswegsamkeit und Verschluss der Materialeinspülkammer wird das Material über den Pilotbohrstrang ausgebohrt und mit der zuvor modifizierten Bohrspülung bis auf die gewünschte Entfernung in Richtung Startgrube an der Bohranlage transportiert.

Nach der Modifizierung der Kornzusammensetzung in der Bohrspülung der Pilotbohrung wird das Pilotbohrgestänge mit Klarwasser gespült und das gemäß der bevorzugten Ausführungsform vorgesehene gasdurchlässige Stützrohr eingebaut. Es wird auch für pneumatische Regenerierungszwecke, z. B. bei unerwünschter Verockerung, genutzt. Es bietet zudem die Möglichkeit, stationäre oder verschiebbare rohrförmige Vorrichtungen zur Gasinjektion oder andere Gasinjektionselemente bei zu starker Alterung zu erneuern oder bei Bedarf zu wechseln, um im Verlauf der Verfahrensführung unterschiedliche Arten von Vorrichtungen zur Gasinjektion zur Erzeugung definierter oder gleichmäßiger Gasspeicherungen installieren zu können.

Es erfolgt außerdem eine Abdichtung des Stützrohrs gegen die Feststoffmatrix bzw. das Gebirge durch Verfüllung von Teilabschnitten des Bohrkanals mit gasundurchlässigem Material. Eine dichtende Verbindung des zum Gasaustritt geschlitzten Stützrohrs mit dem Gebirge verhindert ein unerwünschtes Abdriften und Aufsteigen von Gas über die Schrägen. Die Abdichtung wird bevorzugt im Bereich unterhalb des Grundwasserspiegels und oberhalb des Bereichs, in den der Gaseintrag erfolgen soll, angelegt.

Der folgende Schritt umfasst das Einbringen eines Gasdurchlässe aufweisenden Stützrohrs bevorzugt zentrisch in den Bohrkanal. Dadurch wird dieser stabilisiert und vorbereitet für den nachfolgenden Schritt.

Als nächster Schritt, der gleichzeitig mit dem Einbringen des Stützrohrs oder unmittelbar nachfolgend ausgeführt wird, folgt eine Formierung des abschließenden Bohrkanals mittels eines Auflockerungs- und Homogenisierungswerkzeugs zur Zerstörung der kolmatierten Wand des Bohrkanals. Der neu formierte Bohrkanal weist einen größeren Durchmesser auf als der Pilotbohrkanal. Die Sedimentlagerungsdichte im neuformierten Bohrkanal wird dabei in erster Linie über das Verhältnis des Enddurchmessers zum Pilotbohrkanal bestimmt. Da der neu formierte Bohrkanal über keine stabile Bohrkanalwand mehr verfügt, wird sein innerer Durchmesser durch das gleichzeitig eingezogene Stützrohr und der äußere Durchmesser des homogenisierten Bereichs durch den Durchmesser des Auflockerungswerkzeugs bestimmt.

Das Auflockerungs- und Homogenisierungswerkzeug ist ein Bohrwerkzeug, welches montiert auf das Pilotbohrgestänge ausschließlich im Rückwärtsgang - ausgehend vom Bohrungsende - eingesetzt wird. Es hat einen größeren Durchmesser als der Pilotbohrkopf und wird, ggf. rotierend, ggf. unter Zusatz von Bohrspülung, durch den vorgeprägten Bohrkanal gezogen. Mit der Homogenisierung wird ein homogenisierter Bereich geschaffen Zugleich erfolgt die Einstellung einer Lagerungsdichte im homogenisierten Bereich, der aufgebrochenen früheren Bohrkanalwand, durch Abstimmung der Bohrwerkzeuge aufeinander, speziell der Durchmesser von Pilotbohrkopf und der Durchmesser des Auflockerungswerkzeugs. Beispielsweise liegt der Bereich der Einstellung bei 1,2 - 1,6 g/cm³ im Vergleich zum natürlichen Feststoff mit einer Dichte von ca. 1,7-1,8 g/cm³.

Anstelle des Auflockerungs- und Homogenisierungswerkzeugs können auch andere geeignete Werkzeuge zum Einsatz kommen, wie z. B. ein Ankerwerkzeug, durch das ebenfalls kontrolliert der Bohrkanal, der beispielsweise mit Ton kolmatierte Pilotbohrkanal, zum Einsturz gebracht und die kolmatierte Bohrlochwand zerstört wird, um so einen homogenisierten, das Stützrohr umgebenden Bereich mit verringerter Lagerungsdichte zu schaffen. Der Abzug des Auflockerungs- und Homogenisierungswerkzeugs oder des Ankerwerkzeugs mit dem Pilotbohrgestänge über die gesamte Länge des verlegten Stützrohres führt zur Ausbildung des endgültigen Bohrkanals, der nun homogenisiertes, geogenes und gleichzeitig technogen zugeführtes Material bei verringerter Lagerung und größerer Ungleichförmigkeit enthält. Zugleich erfolgt eine veränderte Einstellung der Lagerungsdichte im Bohrkanal, genauer in dem homogenisierten Bereich, durch Abstimmung der Bohrwerkzeuge aufeinander, indem der Durchmesser des Pilotbohrkopfs auf den Durchmesser des Auflockerungswerkzeugs abgestimmt wird. Ziel ist eine Lagerungsdichte von 1,2 - 1,6 g/cm³, während im natürlichen Feststoff eine Lagerungsdichte von etwa 1,7 - 1,8 g/cm³ vorherrscht.

Es folgt das Abdichten des Bohrkanals im Bereich beider Enden gegenüber der Umgebung, sodass kein Gas axial aus dem Bohrkanal entweichen kann, und letztlich das Schaffen einer Möglichkeit zur Zuführung von Gas in den Bohrkanal. Dies kann durch zumindest eine direkt angeschlossene Gasleitung oder eine eingesetzte gesonderte Vorrichtung zur Gasinjektion erreicht werden.

Es hat sich als günstig erwiesen, wenn die Materialeinspülkammer am Ende der Pilotbohrung fest im Untergrund verankert wird und das einzutragende Material, das Füllmaterial, durch Ausbohren der Kammer in den Pilotkanal bzw. die Pilotbohrung verschleppt wird.

Eine vorteilhafte Möglichkeit für die Injektion des Gases erfolgt über eine verschiebbare, rohrförmige Vorrichtung zur Gasinjektion, umfassend Injektionsdüsen, wobei die Vorrichtung in das Stützrohr eingebracht wird. Die Vorrichtung zur Gasinjektion ist nicht nur in ihrer Lage gegenüber dem Stützrohr veränderbar und verschiebbar, sondern auch komplett auswechselbar, beispielsweise bei Defekt oder bei geänderten Anforderungen, wie Gestaltung, Art und Anzahl von Injektionsdüsen. Es ist wenigstens eine Injektionsdüse zum Austritt des Gases erforderlich. Die Vorrichtung zur Gasinjektion kann als Gasrohr oder Gasschlauch ausgeführt sein, der deren Grundkörper bildet.

Nach einer bevorzugten Ausführungsform weist die Vorrichtung zur Gasinjektion ein oder mehrere abdichtend wirkende Elemente auf. Alternativ hierzu können auch gesonderte Leitungen genutzt werden. Hierdurch können verbesserte Steuerungsmöglichkeiten erzielt werden, indem Bereiche verbunden oder auch eine Endabdichtung erreicht werden kann. Besonders wichtig sind gesondert ansteuerbare Packerelemente in Bereichen des Stützrohrs ohne Perforation.

Das entsprechend gewählte Verhältnis von Gasinjektionsdruck zu den strömungstechnischen Eigenschaften der Injektionsdüsen, insbesondere des Durchmessers, ermöglicht eine superkritische Gasströmung in den Düsen, sodass ein definierter Massenstrom erreicht werden kann, ohne dass dieser durch den äußeren Gegendruck beeinflusst wird.

Die Packerelemente, jeweils paarweise beidseits einer Injektionsdüse angeordnet, werden durch den Gasdruck expandiert und legen sich abdichtend an der Innenwand des Stützrohrs an. Dadurch wird es möglich, ein Abdriften des Gases entlang der Achse des Stützrohrs zu verhindern und den Bereich des Gasaustritts aus dem Stützrohr in den Bohrkanal bzw. in die poröse Feststoffmatrix lokal zu begrenzen.

Ergänzend hat es sich als vorteilhaft erwiesen, wenn die beiden schräg aufsteigenden Teile des Stützrohrs mithilfe einer Verfestigung der Bohrlochwand gegen unerwünschte Gaswegsamkeiten in diesem Bereich abgedichtet werden. Dadurch wird zusätzlich ein axiales Abströmen von Gas durch den homogenisierten Bereich vermieden.

Das Verfahren zur Reduzierung einer hydraulisch wirksamen Porosität einer porösen Feststoffmatrix, wie es mit der nach dem erfindungsgemäßen Verfahren hergestellten Vorrichtung durchgeführt wird, umfasst die Injektion wenigstens eines Gases in die poröse Feststoffmatrix, wobei das Gas einen Gasspeicher, in anderen Anwendungsfeldern auch als Gasschleier bezeichnet, in der porösen Feststoffmatrix ausbildet. Dabei erfolgt die Injektion über einen horizontal und/oder geneigt verlaufenden Bohrkanal, wobei die Neigung des Bohrkanals gegenüber der Horizontalen zwischen > 0 und < 60° beträgt, bevorzugt jedoch bis höchstens 30°. Wird der Bohrkanal mittels eines bekannten Horizontalbohrverfahren, der die poröse Feststoffmatrix aufweist, eingebracht, schließt sich an einen geneigten Abschnitt ein horizontaler Abschnitt an. Die Bohrung wird am Ende über einen geneigten Abschnitt wieder aus dem Untergrund heraus an die Oberfläche geführt. Daraus ergibt sich, dass der Bohrkanal horizontal verläuft oder die Neigung des Bohrkanals gegenüber der Horizontalen zwischen > 0 und < 60° beträgt.

Die injizierte Gasmenge je Stunde ist bevorzugt ca. 50 - 100-mal größer als das Volumen des Bohrkanals. Die Langzeitbeständigkeit des Gasspeichers wird durch den Einsatz gering löslicher Gase bzw. Gasgemische wie Stickstoff oder Luft erhöht.

Der Bohrkanal ist durch seine Form gekennzeichnet. Nach einer Ausgestaltung des Verfahrens ist es beispielsweise vorgesehen, die poröse Feststoffmatrix um ein stützendes Hilfselement herum, insbesondere einem Stützrohr, beispielsweise durch Einspülung von Material, zu entwickeln und damit eine Filterzone mit ihren nachfolgend beschriebenen Funktionen und Effekten herzustellen.

Vorteilhafterweise wird an den Bohrkanal ein Gasdruck angelegt, bevorzugt zwischen 0,5 und 16 bar, besonders bevorzugt 5 - 10 bar, der zugleich an der Wandung des Poren aufweisenden homogenisierten Bereichs anliegt. Der homogenisierte, aufgelockerte Bereich der vormaligen, aufgebrochenen Wand des Bohrkanals, dessen Gaswegsamkeit bevorzugt gezielt beeinflusst und eingestellt wurde, sodass sich von dem Bohrkanal aus eine Vielzahl kohärenter und inkohärenter, vertikaler Gasaufstiegbahnen in die poröse Feststoffmatrix ausbilden. Dadurch formiert sich der Gasspeicher in der porösen Feststoffmatrix, beispielsweise im Gebirge, das bei der bevorzugten Anwendung aus dem Material der porösen Feststoffmatrix besteht.

Nach der primären, horizontalen Gasverteilung im Bohrkanal erfolgt somit über seine gesamte Länge ein kohärenter und inkohärenter, vertikaler Gasaufstieg und die Formierung eines weitgehend homogenen Gasspeichers mit einer kontinuierlichen Versorgung mit frischem Gas sowie signifikant verringerter hydraulisch wirksamer Porosität und daraus resultierend hydraulischer Leitfähigkeit. Der Bohrkanal zeichnet sich bei der bevorzugten Ausgestaltung der Erfindung dadurch aus, dass er im Gegensatz zur umliegenden Feststoffmatrix bzw. dem Gebirge eine geringere Lagerungsdichte mit einem erhöhten Anteil feinerer Kornfraktionen und größerer Ungleichförmigkeit enthält. Hierdurch wird die zunächst angestrebte bevorzugte laterale Gasverteilung im Bohrkanal und der sich dann anschließende kohärente und inkohärente vertikale Gasaufstieg ins darüber liegende Gebirge zur Formierung des Gasspeichers ermöglicht.

Zur Erzeugung möglichst geringer hydraulischer Porositäten erfolgt der Gaseintrag bevorzugt in Mittelsande, Grobsande und Kiese kontinuierlich mit Gaseintragsraten von 0,1 bis 15 m³ pro Stunde und Meter Bohrkanallänge, bevorzugt 0,5 - 4 m³ pro Stunde und Meter Bohrkanallänge. Die Verringerung der hydraulisch wirksamen Porosität in den zu behandelnden Abschnitten gut durchlässiger Grundwasserleiter beträgt bis zu 80 %. Schadstofffrachten werden dadurch hydraulisch determiniert um bis zu 75 % verringert.

Eine vorteilhafte Ausführungsform sieht vor, dass die Injektion über ein Gasdurchlässe aufweisendes Stützrohr erfolgt, welches bevorzugt zentrisch in den Bohrkanal eingebracht ist. Hierzu ist bevorzugt ein gasdurchlässiges Stützrohr mit kleinem Durchmesser zwischen 15 und 150 mm zur Gasinjektion vorgesehen, bevorzugt angeschlossen an ein Gasversorgungs- und Steuerungssystem. Das Stützrohr wird in einem speziell gestalteten horizontalen bzw. schrägen Bohrkanal installiert und gaseingangs- bzw. -ausgangsseitig im Untergrund gegenüber der umgebenden Atmosphäre im Grundwasserbereich verankert und gegen Gasaustritte in die Bodenluft abgedichtet.

Das Stützrohr ist bevorzugt auch zur Aufnahme einer rohrförmigen Vorrichtung zur Gasinjektion in seinem Inneren geeignet, wobei an die Vorrichtung ein Gasdruck angelegt wird und das Gas über wenigstens eine Injektionsdüse in das Stützrohr einströmt.

Besonders vorteilhaft ist das Verfahren einsetzbar, wenn die poröse Feststoffmatrix bevorzugt durch Mittelsande, Grobsande und Kiese gebildet wird. Die Reduzierung der hydraulisch wirksamen Porosität senkt eine hydraulische Leitfähigkeit der porösen Feststoffmatrix auf das Niveau von Feinsanden ab.

Ein bedeutender Vorteil des Verfahrens kommt zum Tragen, wenn zumindest temporär die Injektion wenigstens eines reaktiven Gases, wie z. B. O₂, CH₄, H₂, CO₂, Ethen oder Ethan, zumindest anteilig vorgesehen ist, sodass mikrobielle Abbauprozesse zur weiteren Frachtreduzierung in der porösen Feststoffmatrix initiiert werden. Durch eine temporäre, bedarfsorientierte Zudosierung reaktiver Gase werden mikrobielle Abbauprozesse im Gasspeicher stimuliert, wodurch die Schadstofffracht zusätzlich gesenkt wird. Es hat sich überraschend gezeigt, dass die erfindungsgemäße Reduzierung der hydraulisch wirksamen Porosität einer porösen Feststoffmatrix dazu führt, dass chemische oder biochemische Reaktionen in der porösen Feststoffmatrix bzw. dem eingelagerten oder durchströmenden Fluid, vor allem durch Abbauprozesse die Reduzierung von Frachten, begünstigt werden. Vor allem der verminderte Abfluss der Frachten bietet ausreichend Zeit für die Abbauprozesse und senkt die Wahrscheinlichkeit, dass mikrobiell wirksame Substanzen die für diese Prozesse maßgeblich verantwortlich sind, aus der Zone der Verunreinigungen oder Kontaminationen ausgeschwemmt werden. Als mikrobiell wirksame Substanzen werden vorrangig Mikroorganismen, die zumeist an der Feststoffmatrix gebunden sind, sowie abgesonderte Enzyme, die über den Grundwasserstrom transportiert werden, betrachtet.

Dieser Effekt führt zu einer wirkungsvollen Dekontamination von belastetem Grundwasser.

Vor allem in dem Zusammenhang hat es sich als günstig erwiesen, zwischen einer temporären Injektion, v. a. für reaktive Gase, und einer permanenten Injektion von Gasen, v. a. für inerte Gase, zu variieren. Beispielsweise kann nach erfolgreicher Initiierung einer mikrobiellen Schadstoffminderung durch Änderung des Gaseintrags der Inertgase - von Permanentinjektion auf Temporärinjektion - die hydraulisch wirksame Porosität im Gasspeicher sukzessive wieder erhöht werden.

Gemäß dem bevorzugten Einsatz für das erfindungsgemäße Verfahren bildet die poröse Feststoffmatrix ein Sedimentgefüge aus, d. h. im Sedimentgefüge befindet sich die poröse Feststoffmatrix oder es besteht ganz aus der porösen Feststoffmatrix. Durch die Reduzierung der hydraulisch wirksamen Porosität ist eine Reduzierung einer Grundwasserströmung im Sedimentgefüge vorgesehen.

Besondere Vorteile verspricht das Verfahren, wenn der Gasspeicher in einem Grundwasserleiter unter Beachtung der vom Gas beeinflussten hydrogeologischen Verhältnisse ausgebildet wird. Dies ist zugleich durch eine weitgehend homogene Reduzierung der hydraulisch wirksamen Porosität gekennzeichnet und weist darüber hinaus eine Senkung der Schadstoffkonzentration im Grundwasser, infolge mikrobieller Abbauprozesse und insbesondere initiiert durch den Verbrauch der eingespeicherten reaktiven Gase auf.

Die Reduzierung der Schadstofffracht wird dabei jedoch nicht nur über eine Verringerung der Schadstoffkonzentration erreicht, sondern auch oder vorrangig durch eine Reduzierung der Grundwasserströmung. Hierdurch ergibt sich die Möglichkeit Grundwasserschäden zu sanieren, bei denen die Initiierung mikrobieller Abbauprozesse lange dauert, oder bei denen die mikrobiellen Prozesse während der Sanierung nicht wie gewünscht mit gleicher Prozessintensität und Prozessrichtung ablaufen. In diesem Fall bietet die gezielte Reduzierung der Grundwasserströmung ein zusätzliches Element für eine erfolgreiche Grundwassersanierung.

Es hat sich weiterhin gezeigt, dass die Mächtigkeit des Gasspeichers in horizontaler Ausdehnung in und entgegen der Fließrichtung des Grundwasserleiters vom Auftreten von Gasaufstiegshemmern, insbesondere Feinsande und Schluffe, oder Gasaufstiegsbarrieren, wie z. B. Tone oder Schluffe, abhängig und dabei über die Dauer der Injektion beeinflussbar ist.

Insgesamt hat sich gezeigt, dass die herausragenden Vorteile des zuvor beschriebenen Verfahrens in der Möglichkeit liegen, bei der Behandlung von Schadstofffrachten im Grundwasser die Verringerung der Fließgeschwindigkeit kontrollier- und steuerbar mit der Frachtreduzierung durch Anregung und/oder Unterstützung des biologischen Abbaus zu kombinieren. Die injizierten Gase können Reaktivgasgemische sein oder rein inerte Gase, falls die chemischen Reaktionen in der porösen Feststoffmatrix oder im Untergrund nicht im Vordergrund stehen und das Gas zu anderen Zwecken (z. B. Manipulation der hydraulischen Verhältnisse im Grundwasser) injiziert wird. Dabei hat sich überraschend gezeigt, dass alle Bereiche des Gasspeichers mit kontinuierlich zugeführtem Gas versorgt werden. Dieser Effekt ist besonders wichtig und vorteilhaft, wenn der Gasspeicher zumindest teilweise aus reaktiven Gasen besteht, die sich beispielsweise im Verlauf initiierter Abbauprozesse verbrauchen und immer wieder zugeführt werden müssen, um einen fortgesetzten Prozessverlauf zu erreichen. Gleiches gilt für in das strömende Grundwasser eingelöstes inertes Gas. Im Ergebnis ist die Grundwassersanierung mit einer Absperrung ohne kostenintensive und hochinvasive Spundwände oder Betonwände möglich.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische geschnittene Darstellung während der Durchführung des Verfahrens zur Reduzierung einer hydraulisch wirksamen Porosität einer porösen Feststoffmatrix in seiner bevorzugten Ausgestaltung;
Fig. 2: eine schematische geschnittene Darstellung einer Ausführungsform einer Vorrichtung zur Gasinjektion;
Fig. 3: eine schematische geschnittene Darstellung, die die Verwendung der Materialeinspülkammer und
Fig. 4: eine schematische geschnittene Darstellung, die das Auflockerungs- und Homogenisierungswerkzeug bei der Bearbeitung des Bohrkanals.

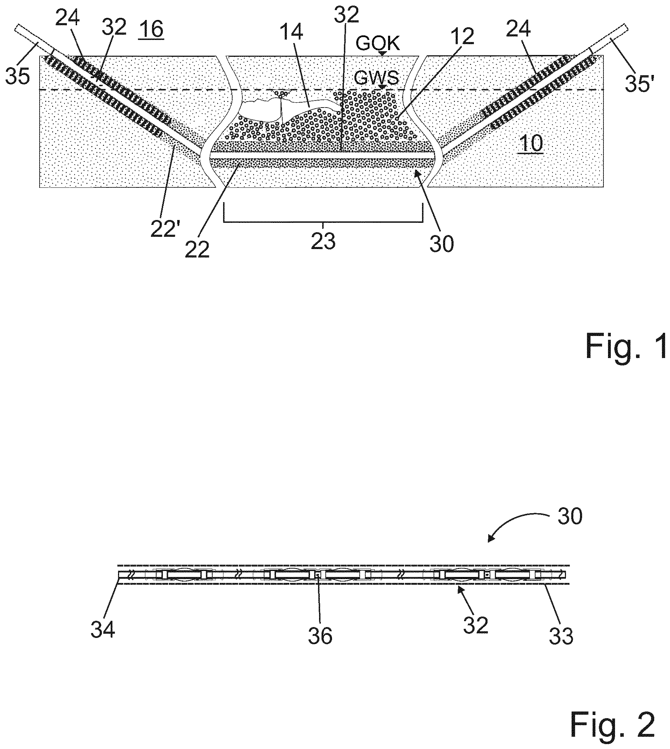

Fig. 1 zeigt eine schematische geschnittene Darstellung während der Durchführung des Verfahrens zur Reduzierung einer hydraulisch wirksamen Porosität einer porösen Feststoffmatrix in seiner bevorzugten Ausgestaltung, wozu eine Feststoffmatrix 10 einen darin eingebrachten Bohrkanal aufweist, dessen Bohrkanalwand bereits zu einem homogenisierten Bereich 22 umgestaltet wurde. Dies dient einem verbesserten und gleichmäßigen Durchtritt von Gasen aus dem Bohrkanal mit dem homogenisierten Bereich 22 in die Feststoffmatrix 10. Das Gas wird zumindest über einer erste Gasleitung 35 herangeführt, was aber gleichermaßen über eine zweite Gasleitung 35' erfolgen kann. Beide dienen somit als Gasleitungen 35, 35' und können wahlweise zur Gaszufuhr mit erhöhtem Gaseintrag, als Redundanz und zum Spülen bei Blockaden in einer der Gasleitungen bzw. in einem Stützrohr 32 eingesetzt werden. An eine der Gasleitungen 35, 35' kann auch eine Messsonde, z. B. zur Druckmessung, angeschlossen werden. Gasleitungen 35, 35' werden entweder unmittelbar an das Stützrohr oder an eine zusätzliche Vorrichtung zur Gasinjektion 34 (vgl. Fig. 2) angeschlossen, wenn eine solche Vorrichtung vorgesehen ist.

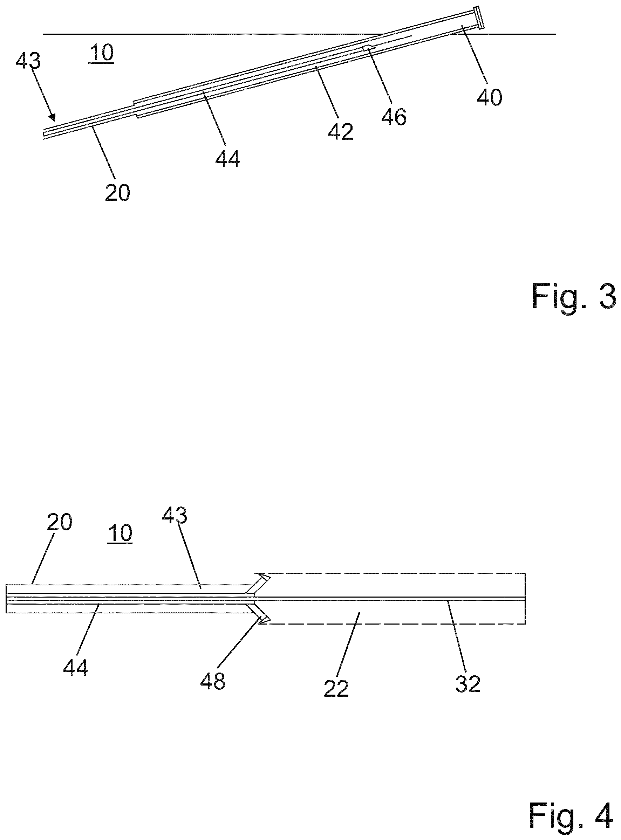

Das Stützrohr 32 (vgl. auch Figuren 2 und 4) wird im dargestellten Ausführungsbeispiel in den früheren Bohrkanal mit kolmatierter Bohrkanalwand 20 eingebracht, wobei gleichzeitig eine Homogenisierung der kolmatierten Bohrkanalwand 20 des ursprünglichen Bohrkanals erfolgt und damit eine Filterzone erzeugt wird, der homogenisierte Bereich 22. Dieser liegt dadurch direkt an dem Stützrohr 32 an.

Das unter Druck über das Stützrohr 32 in den homogenisierten Bereich 22 eingebrachte Gas, im dargestellten Ausführungsbeispiel erfolgt dies mithilfe der Injektionsvorrichtung 30, dringt in die Feststoffmatrix 10 ein und bildet dort über die Länge der Injektionszone 23 einen Gasspeicher 12 aus. Dieser nimmt die Porenräume der Feststoffmatrix 10 ein und behindert damit beispielsweise deren hydraulische Wirksamkeit. Im dargestellten Ausführungsbeispiel bildet sich der Gasspeicher 12 bis zum Grundwasserspiegel GWS aus. Die Ausbildung des Gasspeichers 12, durch stilisierte Luftblasen gekennzeichnet, kann nicht erfolgen, wenn Gasaufstiegsbarrieren 14 oberhalb des Stützrohrs 32 bzw. des homogenisierten Bereichs 22 in der Feststoffmatrix 10 vorliegen.

Um ein unerwünschtes Abdriften des Gases über den homogenisierten Bereich 22 an den Stellen, an denen der Bohrkanal bzw. das an dessen Stelle eingeführte Stützrohr 32 und mit ihm der homogenisierte Bereich 22 eine Neigung in Richtung Geländeoberkante GOK aufweist, zu verhindern, ist eine Abdichtung 24 vorgesehen, die den gasdurchlässigen, homogenisierten Bereich 22 ersetzt. Die Abdichtung 24 umgibt das Stützrohr 32, das im Bereich der Abdichtung 24 keine Perforation und insbesondere keine Gasdurchlässe 33 aufweist, so dass durch die Abdichtung 24 ein unerwünschtes Austreten des unter Druck stehenden Gases in die Umgebung 16 oder anderswo hin, außer in die Injektionszone 23, verhindert wird.

Der homogenisierte Bereich 22' wird nicht für den Gaseintrag genutzt, da das Stützrohr 32 dort keine Gasdurchlässe 33 aufweist. Alternativ zu dieser Ausgestaltung ist es jedoch vorgesehen, auch diesen Bereich zum Gaseintrag mit zu nutzen und das Stützrohr 32 dazu mit Gasdurchlässen 33 auszustatten.

Fig. 2 zeigt eine schematische geschnittene Darstellung eines Abschnitts einer Ausführungsform einer Injektionsvorrichtung 30, insbesondere einer rohrförmigen Vorrichtung 34 zur Gasinjektion. Erkennbar ist in der Darstellung gleichfalls ein Stützrohr 32 mit Gasdurchlässen 33. Das Stützrohr 32 wird in den Bohrkanal in der Weise eingebracht, dass zeitgleich mit dem Einzug des Stützrohrs 32 durch die Homogenisierung des ursprünglichen Bohrkanals mit der kolmatierten Bohrkanalwand 20 (vgl. Figuren 3 und 4) eine Filterzone, der homogenisierte Bereich 22, erzeugt wird. Das Material des homogenisierten Bereichs 22 liegt direkt an dem Stützrohr 32 außen an.

Die Injektionsvorrichtung 30 umfasst die Gasinjektionslanze 34, über die das Gas auf besonders einfache Weise in den homogenisierten Bereich 22 eingebracht werden kann. Damit das Gas die Gasinjektionslanze 34 verlassen kann, weist diese Injektionsdüsen 36 auf. Wenn beabsichtigt wird, dass aus der Injektionsdüse 36 austretende Gas nur in einem bestimmten Bereich des Stützrohrs 32 austreten zu lassen, ist es vorteilhaft, Dichtmittel einzusetzen.

Fig. 3 zeigt eine schematische geschnittene Darstellung, die die Verwendung einer Materialeinspülkammer 40, die mit einem Füllmaterial 42 befüllt ist, verdeutlicht. Ein Bohrkanal, ausgeführt als Pilotbohrung 43, mit der später kolmatierten Bohrkanalwand 20 wird mittels Bohrgestänge 44 und einem Pilotbohrkopf 46 in die Feststoffmatrix 10 eingebracht. Der Pilotbohrkopf 46 trägt zugleich die Materialeinspülkammer 40 und verankert diese in der Feststoffmatrix 10. Aus dem Pilotbohrkopf 46 austretende Bohrspülung dient zum Herausspülen des Füllmaterials 42 aus der Materialeinspülkammer 40. Hierdurch wird eine Kolmation der Bohrkanalwand 20 des Bohrkanals mit Tonpartikeln bewirkt, sodass die bereits kolmatierte Bohrkanalwand 20 durch eine weitere Kolmation überprägt wird.

Fig. 4 zeigt eine schematische geschnittene Darstellung, die das Auflockerungs- und Homogenisierungswerkzeugs 48 bei der Bearbeitung erkennen lässt. Dieses ist am Kopf des Bohrgestänges 44 angebracht und wird an dem Bohrgestänge durch die Pilotbohrung 43 mit ihrer kolmatierten Bohrkanalwand 20 gezogen. Dabei wird die kolmatierte Bohrkanalwand 20 zerstört und der betreffende Bereich homogenisiert, sodass der homogenisierte Bereich 22 entsteht. Der homogenisierte Bereich 22 umschließt das im Bohrgestänge 44 zuvor verlegte Stützrohr 32.

### Bezugszeichenliste

- 10: Feststoffmatrix
- 12: Gasspeicher
- 14: Gasaufstiegsbarriere
- 16: Umgebung
- 20: kolmatierte Bohrkanalwand
- 22: homogenisierter Bereich
- 24: Abdichtung
- 30: Injektionsvorrichtung
- 32: Stützrohr
- 33: Gasdurchlass
- 34: Vorrichtung zur Gasinjektion
- 35, 35': Gasleitung
- 36: Injektionsdüse
- 40: Materialeinspülkammer
- 42: Füllmaterial
- 43: Pilotbohrung
- 44: Bohrgestänge
- 46: Pilotbohrkopf
- 48: Auflockerungs- und Homogenisierungswerkzeug
- GOK: Geländeoberkante
- GWS: Grundwasserspiegel

## Patentansprüche

1. Verfahren zur Herstellung einer Vorrichtung zur Durchführung eines Verfahrens zur Reduzierung einer hydraulisch wirksamen Porosität einer porösen Feststoffmatrix (10) durch Injektion wenigstens eines Gases in die poröse Feststoffmatrix (10), wobei das Gas einen Gasspeicher (12) in der porösen Feststoffmatrix (10) ausbildet, wobei die Injektion über einen horizontal und/oder geneigt verlaufenden Bohrkanal erfolgt, **umfassend** die Schritte
a. Einbringen einer Horizontalbohrung als Pilotbohrung (43), wobei die Neigung des Bohrkanals gegenüber der Horizontalen zwischen > 0 und < 60° beträgt;
b. Eintrag von Material durch eine Bohrspülung oder durch Anfahren ausgewählter Sandschichten oder durch Einsatz einer Materialeinspülkammer (40) zur Ausbildung eines Bohrkanals mit kolmatierter Bohrkanalwand (20) und Beeinflussung einer Gaswegsamkeit durch die kolmatierte Bohrkanalwand (20) hindurch;
c. Einbringen eines Gasdurchlässe (33) aufweisenden Stützrohrs (32); zugleich
d. Formierung eines homogenisierten Bereichs (22) mittels eines Auflockerungs- und Homogenisierungswerkzeugs (48) zur Zerstörung und Homogenisierung der kolmatierten Bohrkanalwand (20) des ursprünglichen Bohrkanals;
e. Schaffen wenigstens einer axialen Barriere in dem homogenisierten Bereich (22) an zumindest einem Ende zumindest gegenüber einer Umgebung (16) mittels einer Abdichtung (24) und
f. Schaffen einer Möglichkeit zur Zuführung von Gas in das Stützrohr (32).

2. Verfahren nach Anspruch 1, wobei bei der Zerstörung und Homogenisierung der kolmatierten Bohrkanalwand (20) des ursprünglichen Bohrkanals zugleich eine Einstellung einer Lagerungsdichte im homogenisierten Bereich (22) erfolgt.

3. Verfahren nach Anspruch 1 oder 2, wobei die Materialeinspülkammer (40) am Ende der Pilotbohrung (43) fest im Untergrund verankert wird und das einzutragende Füllmaterial (42) durch Ausbohren der Materialeinspülkammer (40) in den mit der Pilotbohrung (43) aufgebohrten Bohrkanal verschleppt wird.

4. Verfahren nach einem der vorherigen Ansprüche, wobei die Injektion des Gases über eine Injektionsdüsen (36) umfassende, verschiebbare rohrförmige Vorrichtung (34) erfolgt, die in das Stützrohr (32) eingebracht wird.

5. Verfahren nach einem der Ansprüche 1 bis 4, umfassend das Verfahren zur Reduzierung der hydraulischen Porosität der porösen Feststoffmatrix durch Injektion des Gases über den horizontal und/oder geneigt verlaufenden Bohrkanal.

6. Verfahren nach Anspruch 5, wobei an den Bohrkanal ein Gasdruck angelegt wird, der zugleich an einem homogenisierten Bereich (22) anliegt, der sich radial um den Bohrkanal herum erstreckt und Poren aufweist, sodass sich von dem homogenisierten Bereich (22) aus eine Vielzahl kohärenter und inkohärenter, vertikaler Gasaufstiegsbahnen in die poröse Feststoffmatrix (10) ausbilden.

7. Verfahren nach Anspruch 5 oder 6, wobei die Injektion über das Stützrohr (32) erfolgt, welches in den Bohrkanal eingebracht ist.

8. Verfahren nach einem der Ansprüche 5 bis 7, wobei in dem Stützrohr (32) eine Gasinjektionslanze (34) aufgenommen wird, wobei an die Gasinjektionslanze (34) ein Gasdruck angelegt wird, das Gas über wenigstens eine Injektionsdüse (36) in das Stützrohr (32) einströmt und über die Gasdurchlässe (33) zunächst in den Bohrkanal (22) und dann in die poröse Feststoffmatrix (10) eindringt.

9. Verfahren nach einem der Ansprüche 5 bis 8, wobei mittels mikrobieller Abbauprozesse eine Verringerung einer Schadstofffracht in der porösen Feststoffmatrix (10) erfolgt.

10. Verfahren nach einem der Ansprüche 5 bis 9, wobei ein Sedimentgefüge als die poröse Feststoffmatrix (10) vorgesehen ist und durch die Reduzierung der hydraulisch wirksamen Porosität eine Grundwasserströmung im Sedimentgefüge reduziert wird, wobei der Gasspeicher (12) in einem Grundwasserleiter ausgebildet wird.

11. Verfahren nach Anspruch 10, wobei die Mächtigkeit des Gasspeichers (12) in horizontaler Ausdehnung in und entgegen der Fließrichtung des Grundwasserleiters vom Auftreten von Gasaufstiegshemmern oder Gasaufstiegsbarrieren (14) abhängig ist.

## Claims

1. A method for producing an apparatus for carrying out a method for reducing a hydraulically effective porosity of a porous solid matrix (10) by injecting at least one gas into the porous solid matrix (10), the gas forming a gas reservoir (12) in the porous solid matrix (10), the injection being carried out via a horizontal and/or inclined drilling channel, comprising the steps of
a. drilling a horizontal bore as a pilot bore (43), the inclination of the drilling channel relative to the horizontal being between > 0 and < 60°;
b. introducing material through a drilling fluid or by delivering selected sand layers or by using a material injection chamber (40) to form a drilling channel having a colmated drilling channel wall (20) and to affect a gas pathway through the colmated drilling channel wall (20);
c. inserting a support tube (32) having gas passages (33); at the same time
d. forming a homogenized region (22) by means of a loosening and homogenizing tool (48) to destroy and homogenize the colmated drilling channel wall (20) of the original drilling channel;
e. creating at least one axial barrier in the homogenized region (22) at least at one end with respect to at least one environment (16) by means of a seal (24); and
f. providing a means for feeding gas into the support tube (32).

2. The method according to claim 1, wherein during the destruction and homogenization of the colmated drilling channel wall (20) of the original drilling channel, an adjustment of a degree of compactness in the homogenized region (22) is carried out at the same time.

3. The method according to claim 1 or 2, wherein the material injection chamber (40) at the end of the pilot bore (43) is firmly anchored in the substrate and the filling material (42) to be introduced is carried into the drilling channel drilled with the pilot bore (43) by drilling out the material injection chamber (40).

4. The method according to any one of the preceding claims, wherein the gas is injected via a displaceable tubular apparatus (34) comprising injection nozzles (36), which is inserted into the support tube (32).

5. The method according to any one of claims 1 to 4, comprising the method for reducing the hydraulic porosity of the porous solid matrix by injecting the gas via the horizontal and/or inclined drilling channel.

6. The method according to claim 5, wherein a gas pressure is applied to the drilling channel while also being applied to a homogenized region (22) extending radially around the drilling channel and having pores such that a plurality of coherent and incoherent vertical gas ascent paths are formed from the homogenized region (22) into the porous solid matrix (10).

7. The method according to claim 5 or 6, wherein the injection is performed via the support tube (32) inserted into the drilling channel.

8. The method according to any one of claims 5 to 7, wherein a gas injection lance (34) is received in the support tube (32), wherein a gas pressure is applied to the gas injection lance (34), the gas flows into the support tube (32) via at least one injection nozzle (36) and via the gas passages (33) first enters the drilling channel (22) and then the porous solid matrix (10).

9. The method according to any one of claims 5 to 8, wherein a reduction of a pollutant load in the porous solid matrix (10) is effected by means of microbial degradation processes.

10. The method according to any one of claims 5 to 9, wherein a sedimentary structure is provided as the porous solid matrix (10) and a groundwater flow in the sedimentary structure is reduced by reducing the hydraulically effective porosity, wherein the gas reservoir (12) is formed in an aquifer.

11. The method according to claim 10, wherein the thickness of the gas reservoir (12) in horizontal extension in and against the flow direction of the aquifer is dependent on an occurrence of gas ascent inhibitors or gas ascent barriers (14).

## Revendications

1. Procédé de fabrication d'un dispositif pour la réalisation d'un procédé de réduction d'une porosité à efficacité hydraulique d'une matrice solide poreuse (10) par injection d'au moins un gaz dans la matrice solide poreuse (10), dans lequel le gaz constitue un accumulateur de gaz (12) dans la matrice solide poreuse (10), dans lequel l'injection s'effectue par le biais d'un canal de forage s'étendant horizontalement et/ou de manière inclinée, **comprenant** les étapes de
a. introduction d'un forage horizontal en tant que forage pilote (43), dans lequel l'inclinaison du canal de forage par rapport à l'horizontale est comprise entre > 0 et < 60° ;
b. alimentation de matériau par un rinçage de forage ou par amenée de couches de sable sélectionnées ou par utilisation d'une chambre de rinçage de matériau (40) pour la réalisation d'un canal de forage à paroi de canal de forage colmatée (20) et l'influence d'un trajet gazeux à travers la paroi de canal de forage colmatée (20) ;
c. introduction d'un tuyau de support (32) présentant des passages gazeux (33) ; en même temps
d. formation d'une région homogénéisée (22) au moyen d'un outil de désagrégation et d'homogénéisation (48) pour la destruction et l'homogénéisation de la paroi de canal de forage colmatée (20) du canal de forage d'origine ;
e. création d'au moins une barrière axiale dans la région homogénéisée (22) à au moins une extrémité au moins par rapport à un environnement (16) au moyen d'un colmatage (24) et
f. création d'une possibilité pour l'approvisionnement en gaz dans le tuyau de support (32).

2. Procédé selon la revendication 1, dans lequel un réglage d'une densité de stratification dans la région homogénéisée (22) s'effectue en même temps lors de la destruction et l'homogénéisation de la paroi de canal de forage colmatée (20) du canal de forage d'origine.

3. Procédé selon la revendication 1 ou 2, dans lequel la chambre de rinçage de matériau (40) à l'extrémité du forage pilote (43) est ancrée fixement dans le sous-sol et le matériau de remplissage à alimenter (42) est entraîné dans le canal de forage percé avec le forage pilote (43) par évidement de la chambre de rinçage de matériau (40).

4. Procédé selon une des revendications précédentes, dans lequel l'injection du gaz s'effectue par le biais d'un dispositif tubulaire coulissant (34) comprenant des buses d'injection (36) qui est introduit dans le tuyau de support (32).

5. Procédé selon une des revendications 1 à 4, comprenant le procédé de réduction de la porosité hydraulique de la matrice solide poreuse par injection du gaz par le biais du canal de forage s'étendant horizontalement et/ou de manière inclinée.

6. Procédé selon la revendication 5, dans lequel une pression gazeuse est appliquée au canal de forage, laquelle s'applique en même temps à une région homogénéisée (22) qui s'étend radialement autour du canal de forage et présente des pores de sorte qu'une pluralité de voies de montée gazeuse verticales, cohérentes et incohérentes, se forment dans la matrice solide poreuse (10) depuis la région homogénéisée (22).

7. Procédé selon la revendication 5 ou 6, dans lequel l'injection s'effectue par le biais du tuyau de support (32) qui est introduit dans le canal de forage.

8. Procédé selon une des revendications 5 à 7, dans lequel une lance d'injection gazeuse (34) est reçue dans le tuyau de support (32), dans lequel une pression gazeuse est appliquée à la lance d'injection gazeuse (34), le gaz afflue par le biais d'au moins une buse d'injection (36) dans le tuyau de support (32) et pénètre par le biais des passages gazeux (33) d'abord dans le canal de forage (22), puis dans la matrice solide poreuse (10).

9. Procédé selon une des revendications 5 à 8, dans lequel une réduction d'une charge en substances nocives dans la matrice solide poreuse (10) s'effectue au moyen de processus de dégradation microbienne.

10. Procédé selon une des revendications 5 à 9, dans lequel une structure sédimentaire est prévue en tant que matrice solide poreuse (10) et un courant des eaux souterraines dans la structure sédimentaire est réduit par la réduction de la porosité à efficacité hydraulique, dans lequel l'accumulateur de gaz (12) est réalisé dans une canalisation d'eaux souterraines.

11. Procédé selon la revendication 10, dans lequel la puissance de l'accumulateur de gaz (12) dans l'étendue horizontale dans et à l'encontre de la direction d'écoulement de la canalisation d'eaux souterraines dépend de la survenue d'inhibiteurs de montée gazeuse ou de barrières de montée gazeuse (14).
